(19) **Europäisches Patentamt** / **European Patent Office** / **Office européen des brevets**

(11) **EP 2 903 312 B1**

(12) **EUROPEAN PATENT SPECIFICATION**

(45) Date of publication and mention
of the grant of the patent:
**25.04.2018  Bulletin 2018/17**

(51) Int Cl.:
**H04W 72/12** *(2009.01)*    *H04W 4/10* *(2009.01)*

(21) Application number: **13842834.7**

(86) International application number:
**PCT/CN2013/080738**

(22) Date of filing: **02.08.2013**

(87) International publication number:
**WO 2014/048171 (03.04.2014 Gazette 2014/14)**

(54) **METHOD AND DEVICE FOR PROCESSING TRUNKING SERVICE, BASE STATION AND USER EQUIPMENT**

BÜNDELUNGSDIENSTVERARBEITUNGSVERFAHREN UND VORRICHTUNG, BASISSTATION UND BENUTZERVORRICHTUNG

PROCÉDÉ ET DISPOSITIF DE TRAITEMENT DE SERVICE À RESSOURCES PARTAGÉES, STATION DE BASE ET ÉQUIPEMENT UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2012  CN 201210375161**

(43) Date of publication of application:
**05.08.2015  Bulletin 2015/32**

(73) Proprietor: **ZTE Corporation**
**Shenzhen, Guangdong 518057 (CN)**

(72) Inventors:
• **LI, Liangbin**
**Shenzhen**
**Guangdong 518057 (CN)**
• **XIE, Zhongshi**
**Shenzhen**
**Guangdong 518057 (CN)**
• **LI, Yi**
**Shenzhen**
**Guangdong 518057 (CN)**

• **HUANG, Zhiqiang**
**Shenzhen**
**Guangdong 518057 (CN)**
• **YU, Xi**
**Shenzhen**
**Guangdong 518057 (CN)**

(74) Representative: **Mozzi, Matteo**
**Jacobacci & Partners S.p.A.**
**Via Senato, 8**
**20121 Milano (IT)**

(56) References cited:
CN-A- 101 621 749    CN-A- 102 083 013
CN-A- 102 149 049    CN-A- 102 638 767
CN-A- 102 892 084    US-A1- 2010 261 468

• JI LI ET AL: "Compressed Multicast Retransmission in LTE-A eMBMS", 2010 IEEE VEHICULAR TECHNOLOGY CONFERENCE (VTC 2010-SPRING) - 16-19 MAY 2010 - TAIPEI, TAIWAN, IEEE, US, 16 May 2010 (2010-05-16), pages 1-5, XP031696040, ISBN: 978-1-4244-2518-1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The present invention relates to the field of communications, including e.g., a method and a device for processing trunking service, a base station and a User Equipment (UE).

## Background

A trunking communication system is a mobile communication system used for communication by a group to schedule and command, mainly applied to the field of professional mobile communication. The trunking communication systems present currently comprise: a Terrestrial Trunked Radio (TETRA) system, an Integrated Digital Enhanced Networks (iDEN) system, a Global Open Trunking Architecture (GoTa) system and a GT800 system or the like.

All of the existing trunking communication systems are implemented based on the second generation mobile communication system (2G) or the third generation communication system (3G). The existing trunking communication systems may provide narrow band voice services and low rate data service. However, with the rapid development of the application of the fourth generation (4G) mobile communication system, the internet, and a smart phone, the service requirements of trunking users such as social sectors, enterprise users and government bodies for the service of a digital trunking communication system is changing from an ordinary scheduled voice to a broadband multimedia of voice, data, image and video gradually. A broadband digital trunking communication system with a large bandwidth and having Quality of Service (QoS) assurance is brought into schedule gradually, but the existing digital trunking communication system is more and more difficult to meet the above requirements.

Therefore, there is a problem in the related art that the trunking communication system cannot meet user's higher service requirement to improve higher user experience.

CN 102 149 049 A relates to a trunked service implementation method in digital trunking communication system and trunked user terminal.

CN 102 638 767 A relates to method and device for trunking service transmission in a broadcasting manner improving performance of trunking transmission while overcoming co-channel interference.

## Summary

The present invention concerns method and apparatus as defined in independent claims 1, 7, 9, 12. Embodiments representing particular realisations of the invention are defined in the dependent claims.

A method and a device for processing trunking service, a base station and user equipment are provided in the present invention, so at least to solve the problems in the related art that a trunking communication system cannot satisfy user's service requirements and the user experience is reduced.

According to one aspect of the present invention, a method for processing trunking service is provided, comprising: generating, by a base station, scheduling information used for scheduling Global Trunking Channel (GTCH) resources for performing a trunking service with one or more User Equipments (UEs) based on a Long Term Evolution (LTE) system; and transmitting, by the base station, the generated scheduling information to the one or more UEs.

According to an embodiment of the present invention, before the base station generates the scheduling information used for scheduling the GTCH resources for performing the trunking service with the one or more UEs based on the LTE system, the method further comprises: configuring, by the base station, the GTCH resources for performing the trunking service with the one or more UEs.

According to an embodiment of the present invention, configuring, by the base station, the GTCH resources for performing the trunking service with one or more UEs comprises at least one of: allocating, by the base station, a Cell-Radio Network Temporary Identifier (C-RNTI) to the one or more UEs; allocating, by the base station, a periodically reported resource to the one or more UEs; allocating, by the base station, a channel resource occupied for maintaining an uplink synchronization way and/or uplink synchronization to the one or more UEs; allocating, by the base station, a Group-Radio Network Temporary Identifier (Group-RNTI) to the one or more UEs; and allocating, by the base station, a resource for a Hybrid Automatic Repeat Request (HARQ) being performed on the GTCH to the one or more UEs, wherein an indication for indicating that the HARQ is performed is borne on a Physical Uplink Control Channel (PUCCH) or a Physical Random Access Channel (PRACH).

According to an embodiment of the present invention, based on that the indication for indicating that the HARQ is performed is borne on the PUCCH, allocating, by the base station, the resource for the HARQ being performed on the GTCH to the one or more UEs comprises at least one of the following: allocating, by the base station, a transmission format of an HARQ acknowledgement/negative acknowledgment on the GTCH to the one or more UEs; allocating, by the base station, a cyclic shift value of an HARQ acknowledgement/negative acknowledgment on the GTCH to the one or more UEs; allocating, by the base station, a resource position of the HARQ on the GTCH within each Transmission Time Interval (TTI) to the one or more UEs; or based on that the indication for indicating that the HARQ is performed is borne on the PRACH, allocating, by the base station, the resource for the HARQ being performed on the GTCH to the one or more UEs comprises at least one of the following: a preamble format of the PRACH, a spectrum position of a preamble of the PRACH, and a preamble index of a preamble of the PRACH.

According to an embodiment of the present invention, transmitting, by the base station, the scheduling information to the one or more UEs comprises: bearing, by the base station, the scheduling information on a Physical Downlink Control Channel (PDCCH); identifying and scrambling, by the base station, the PDCCH on which the scheduling information is borne by using the Group-RNTI; and transmitting, by the base station, the scheduling information to the one or more UEs through the identified and scrambled PDCCH.

According to an embodiment of the present invention, transmitting, by the base station, the scheduling information to the one or more UEs comprises: notifying, by the base station, the one or more UEs of whether the scheduling information is borne on the PDCCH through a predetermined subframe.

According to an embodiment of the present invention, after the base station transmits the generated scheduling information to the one or more UEs, the method further comprises: based on that negative acknowledgment information from the one or more UEs are received, the base station retransmits the scheduling information of the GTCH.

According to another aspect of the present invention, a method for processing trunking service, comprising: receiving, by a User Equipment (UE), scheduling information used for scheduling Global Trunking Channel (GTCH) resources for performing a trunking service with a base station based on a Long Term Evolution (LTE) system; judging, by the UE, whether the scheduling information is received successfully, and/or, whether a Physical Downlink Shared Channel (PDSCH) mapped by the GTCH is decoded successfully according to the scheduling information; and based on that the UE does not receive the scheduling information successfully, and/or the PDSCH mapped by the GTCH is not decoded successfully according to the scheduling information, transmitting, by the UE, negative acknowledgment information to the base station.

According to an embodiment of the present invention, judging, by the UE, whether the scheduling information is received successfully, and/or, whether the PDSCH mapped by the GTCH is decoded successfully according to the scheduling information comprises: judging, by the UE, whether the base station transmits the scheduling information through a Physical Downlink Control Channel (PDCCH) identified and scrambled by using a Group-Radio Network Temporary Identifier (Group-RNTI) to the UE, and whether the base station notifies the UE of whether the scheduling information of the GTCH is present in the PDCCH through a predetermined subframe, wherein the scheduling information is borne on the PDCCH; based on that a judgment result is that the base station transmits the scheduling information through the PDCCH identified and scrambled by using the Group-RNTI to the UE, and the base station notifies the UE of whether the scheduling information of the GTCH is present in the PDCCH through the predetermined subframe, judging, by the UE, whether the scheduling information is received through the PDCCH identified and scrambled by using the Group-RNTI, and/or, whether the PDSCH mapped by the GTCH is decoded successfully according to the scheduling information; and based on that the judgment result is that the scheduling information is not received through the PDCCH identified and scrambled by using the Group-RNTI, and/or, the PDSCH mapped by the GTCH is not decoded successfully according to the scheduling information, it is determined that the UE does not receive the scheduling information successfully, and/or that the PDSCH mapped by the GTCH is not decoded successfully according to the scheduling information.

According to another aspect of the present invention, a device for processing trunking service, comprising: a generating component, configured to generate scheduling information used for scheduling Global Trunking Channel (GTCH) resources for performing a trunking service with one or more User Equipments (UEs) based on a Long Term Evolution (LTE) system; and a first transmitting component, configured to transmit the generated scheduling information to the one or more UEs.

According to an embodiment of the present invention, the device further comprising: a first configurating component, configured to configure the GTCH resources for performing the trunking service with the one or more UEs.

According to an embodiment of the present invention, the first transmitting component comprises: a bearing element, configured to bear the scheduling information on a Physical Downlink Control Channel (PDCCH); a scrambling element, configured to identify and scramble the PDCCH on which the scheduling information is borne by using a Group-Radio Network Temporary Identifier (Group-RNTI); and a transmitting element, configured to transmit the scheduling information to the one or more UEs through the identified and scrambled PDCCH.

According to an embodiment of the present invention, the first transmitting component comprises: a notifying element, configured to notify the one or more UEs of whether the scheduling information is borne on the PDCCH through a predetermined subframe.

According to another aspect of the present invention, a base station is provided in the present invention, comprising any one of the above devices.

According to another aspect of the present invention, a device for processing trunking service, comprising: a receiving component, configured to receive scheduling information used for scheduling Global Trunking Channel (GTCH) resources for performing a trunking service with a base station based on a Long Term Evolution (LTE) system; a first judging component, configured to judge whether the scheduling information is received successfully, and/or, whether a Physical Downlink Shared Channel (PDSCH) mapped by the GTCH is decoded successfully according to the scheduling information; and a second transmitting component, configured to, based on that the UE does not receive the scheduling information successfully, and/or the PDSCH mapped by the GTCH is not decoded successfully according to the scheduling information, transmit negative acknowledgment information to the base station.

According to an embodiment of the present invention, the first judging component comprises: a first judging element, configured to judge whether the base station transmits the scheduling information through a Physical Downlink Control Channel (PDCCH) identified and scrambled by using a Group-Radio Network Temporary Identifier (Group-RNTI) to the UE, and whether the base station notifies the UE of whether the scheduling information of the GTCH is present in the PDCCH through a predetermined subframe, wherein the scheduling information is borne on the PDCCH; a second judging element, configured to, based on that a judgment result of the first judging element is that the base station transmits the scheduling information through the PDCCH identified and scrambled by using the Group-RNTI to the UE, and the base station notifies the UE of whether the scheduling information of the GTCH is present in the PDCCH through the predetermined subframe, judge whether the scheduling information is received through the PDCCH identified and scrambled by using the Group-RNTI, and/or, whether the PDSCH mapped by the GTCH is decoded successfully according to the scheduling information; and a determining element, configured to, based on that the judgment result of the second judging element is that the scheduling information is not received through the PDCCH identified and scrambled by using the Group-RNTI, and/or, the PDSCH mapped by the GTCH is not decoded successfully according to the scheduling information, determine that the UE does not receive the scheduling information successfully, and/or that the PDSCH mapped by the GTCH is not decoded successfully according to the scheduling information.

According to another aspect of the present invention, a User equipment (UE) is provided in the present invention, comprising any one of the above devices.

Through the present invention, a base station generates scheduling information used for scheduling GTCH resources for performing a trunking service with one or more UEs based on a LTE system; and the base station transmits the generated scheduling information to the one or more UEs. The present invention solves the problems that a trunking communication system cannot satisfy user's service requirements and the user experience is reduced, thereby achieving the effects of satisfying user's trunking service requirements based on the LTE system and improving the user experience.

## Brief Description of the Drawings

The accompanying drawings described herein serve to provide a further understanding of the present invention, and constitute a part of this application. The schematic embodiments of the present invention and description thereof serve to explain the present invention rather than to limit the present invention inappropriately. In the drawings:

Fig. 1 is flowchart I of a method for processing trunking service according to an embodiment of the present invention;
Fig. 2 is flowchart II of a method for processing trunking service according to an embodiment of the present invention;
Fig. 3 is structural diagram I of a device for processing trunking service according to an embodiment of the present invention;
Fig. 4 is preferred structural diagram I of a device for processing trunking service according to an embodiment of the present invention;
Fig. 5 is preferred structural diagram I of a first transmitting component 34 in a device for processing trunking service according to an embodiment of the present invention;
Fig. 6 is preferred structural diagram II of a first transmitting component 34 in a device for processing trunking service according to an embodiment of the present invention;
Fig. 7 is a structural diagram of a base station according to an embodiment of the present invention;
Fig. 8 is structural diagram II of a device for processing trunking service according to an embodiment of the present invention;
Fig. 9 is a preferred structural diagram of a first judging component 74 in a device for processing trunking service according to an embodiment of the present invention;
Fig. 10 is a structural diagram of user equipment according to an embodiment of the present invention;
Fig. 11 is a schematic diagram of trunking service channel GTCH mapping according to an embodiment of the present invention;
Fig. 12 is a schematic diagram of a group establishment method according to an embodiment of the present invention;
Fig. 13 is a schematic diagram in which a base station assigns an HARQ resource of a group GTCH to a non-speaking right user according to an embodiment of the present invention; and
Fig. 14 is a schematic diagram in which a base station performs group GTCH scheduling and HARQ to a non-speaking right user according to an embodiment of the present invention.

## Detailed Description of the Embodiments

Hereinafter, the present invention will be described in detail with reference to the accompanying drawings and in conjunction with the embodiments. It should be noted that the embodiments of the application and the features of the embodiments may be combined with each other when there is no conflict.

A LTE technology is becoming a mainstream 4G communication technology, which is also a mainstream of the future communication development. An LTE protocol is a point-to-point oriented communication protocol. The trunking communication system based on the LTE technology is of natural technology advantages, and may provide various services with a large bandwidth and having QoS assurance, for example voice, video, image or the like. For the above problem, a method of how to provide a trunking communication service with larger bandwidth and QoS assurance by the LTE technology is provided in the present embodiment, and will be described below in conjunction with the accompanying drawings.

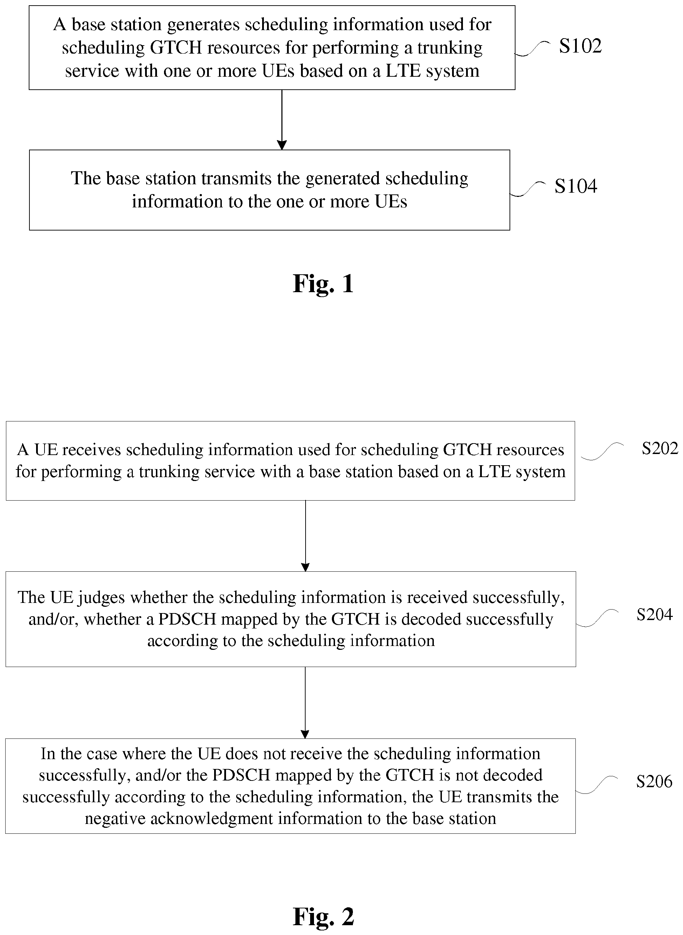

A method for processing trunking service is provided in the present embodiment. Fig. 1 is flowchart I of a method for processing trunking service according to an embodiment of the present invention. As shown in Fig. 1, the flow includes the following steps:

> Step 102: a base station generates scheduling information used for scheduling GTCH resources for performing a trunking service with one or more UEs based on a LTE system; and
> Step 104: the base station transmits the generated scheduling information to the one or more UEs.

Through the above steps, based on that an unicast LTE protocol is retained based on the existing LTE system, a resource configuration for the trunking service is newly added, and the resource configuration information of the resource configuration is transmitted to the UE within the scope of the trunking service, relative to the related art that the trunking service is based on the 2G and 3G, or the trunking service cannot be applied in the existing LTE, user's trunking service requirements based on the LTE system are not only met, but also the user experience is improved to some extent.

Before the base station generates scheduling information used for performing the trunking service with the one or more UEs based on the LTE system, the resource of the trunking service with the one or more UEs may be configured firstly. There may be many contents involved in allocating the resource of the trunking service. For example, allocating, by the base station, the resources of the trunking service with the one or more UEs includes at least one of the following: the base station allocates a C-RNTI to the one or more UEs; the base station allocates a periodically reported resource to the one or more UEs; the base station allocates a channel resource occupied for maintaining an uplink synchronization way and/or uplink synchronization to the one or more UEs; the base station allocates a Group-RNTI to the one or more UEs; the base station allocates a resource for the GTCH performing an HARQ to the one or more UEs, and the base station allocates an indication for indicating that the HARQ is performed for the GTCH to the one or more UEs (that is, in the case where the UE does not receive the scheduling information successfully, and/or the PDSCH mapped by the GTCH is not decoded successfully according to the scheduling information, the UE transmits a negative acknowledgement indication to the base station), wherein the indication may be borne on a PUCCH, and may also be borne on a PRACH. For example, based on that the indication for indicating that the HARQ is performed is borne on the PUCCH, allocating, by the base station, the resource for the HARQ being performed on the GTCH to the one or more UEs may also include at least one of the following: the base station allocates a transmission format of an HARQ acknowledgement/negative acknowledgment on the GTCH to the one or more UEs; the base station allocates a cyclic shift value of an HARQ acknowledgement/negative acknowledgment on the GTCH to the one or more UEs; the base station allocates a resource position of the HARQ on the GTCH within each TTI to the one or more UEs. Based on that the indication for indicating that the HARQ is performed is borne on the PRACH, allocating, by the base station, the resource for the HARQ be performing on the GTCH to the one or more UEs includes at least one of the following: a preamble format of the PRACH, a spectrum position or Resource Block (RB) position of the preamble of the PRACH, and a preamble index of the preamble of the PRACH (PreambleIndex of the PRACH of 36.331 protocol).

The base station may transmit the generated scheduling information to the one or more UEs in many ways, for example, by newly constructing notification information, or by bearing the scheduling information in the existing information. In the embodiment, a preferred processing way is provided: the base station bears the scheduling information on a PDCCH; the base station identifies and scrambles the PDCCH on which the scheduling information is borne by using the Group-RNTI; and the base station transmits the scheduling information to the one or more UEs through the identified and scrambled PDCCH. Such a processing way not only may effectively utilize the existing PDCCH resource, but also may guarantee the reliability that the base station transmits the scheduling information to the one or more UEs to some extent. Since it may be possible to have a packet error when a packet is received on the PDCCH identified and scrambled through the Group-RNTI at a non-speaking right terminal side, in order to ensure that the non-speaking right terminal may know whether a scheduling result and resource allocation information (i.e., scheduling information) generated on the GTCH are present in the PDCCH reliably, the eNodeB, on the subframe X (a predetermined subframe), notifies the non-speaking right terminal of a group of whether the PDCCH identified and scrambled by the Group-RNTI of Group A is on the subframe X.

After the base station transmits the generated scheduling information to the one or more UEs, based on that the negative acknowledgment information from the UE is received, the base station retransmits the scheduling information of the GTCH. That is, after the UE transmits the negative acknowledgment information to the base station, the base station retransmits the scheduling information of the GTCH of the Group A, and the retransmission way may be as described above.

In the embodiment, a method for processing a trunking service is provided. Fig. 2 is flowchart II of a method for processing trunking service according to an embodiment of the present invention. As shown in Fig. 2, the flow includes the following steps:

> Step 202: A UE receives scheduling information used for scheduling GTCH resources for performing a trunking service with a base station based on a LTE system;
> Step 204: The UE judges whether the scheduling information is received successfully, and/or, whether a PDSCH mapped by the GTCH is decoded successfully according to the scheduling information; and
> Step 206: In the case where the UE does not receive the scheduling information successfully, and/or the PDSCH mapped by the GTCH is not decoded successfully according to the scheduling information, the UE transmits the negative acknowledgment information to the base station.

When the UE judges whether the scheduling information corresponding to the GTCH is received successfully, and/or, the PDSCH mapped by the GTCH is decoded successfully according to the scheduling information, the judgment may be made in the following preferred ways: the UE judges whether the base station transmits the scheduling information through a PDCCH identified and scrambled by using a Group-RNTI to the UE, and whether the base station notifies the UE of whether the scheduling information of the GTCH is present in the PDCCH through the predetermined subframe, wherein the scheduling information is borne on the PDCCH; in the case where the judgment result is that the base station transmits the scheduling information through the PDCCH identified and scrambled by using the Group-RNTI to the UE, and the base station notifies the UE of whether the scheduling information of the GTCH is present in the PDCCH through the predetermined subframe, the UE judges whether the scheduling information is received through the PDCCH identified and scrambled by using the Group-RNTI, and/or, whether the PDSCH mapped by the GTCH is decoded successfully according to the scheduling information of the GTCH;

and when the scheduling information is not received through the PDCCH identified and scrambled by using the Group-RNTI, that is, the base station indicates that there is the scheduling information of the GTCH, but the UE cannot receive the scheduling information of the GTCH, it may be determined that the UE does not receive the scheduling information successfully, and the UE may transmit the negative acknowledgment information to the base station. However, after the UE can receive the scheduling information of the GTCH, when the PDSCH mapped by the GTCH is not decoded successfully according to the scheduling information, the UE may transmit the negative acknowledgment information to the base station. That is, in the above judgment steps, as long as one judgment result of the steps is negative, the UE may transmit the negative acknowledgment information to the base station.

After the UE transmits the negative acknowledgment information to the base station, the base station learns that the UE (the non-speaking right terminal) does not receive the information successfully, and therefore, the base station retransmits on the GTCH to the UE, and then when the UE receives the scheduling information used for scheduling the GTCH resource for the base station performing retransmitting, it is determined whether the retransmission is successful by using the judgment way the same as the above.

A device for processing trunking service is provided in the present embodiment, which is configured to implement the above embodiments and preferred embodiments, and has been described and not repeated again. As used below, term "component" may implement the combination of software and/or hardware of predetermined functions. Although the device described in the following embodiments is preferably implemented in software, it is possible and conceived that hardware, or a combination of software and hardware may be used for implementation.

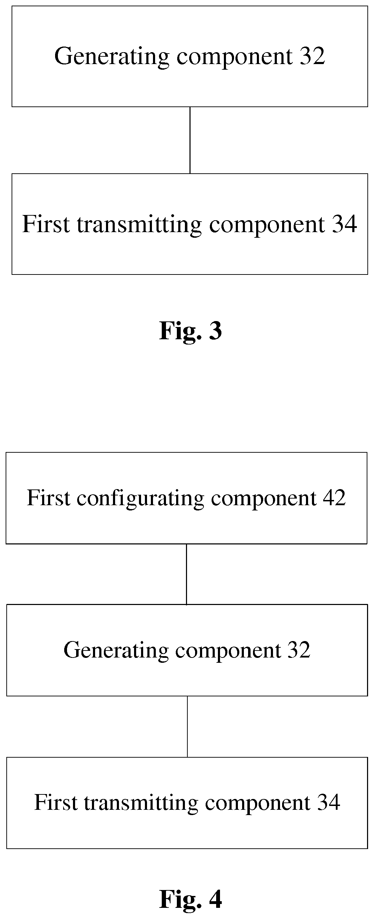

Fig. 3 is structural diagram I of a device for processing trunking service according to an embodiment of the present invention. As shown in Fig. 3, the device includes a generating component 32 and a first transmitting component 34. The device will be described below.

The generating component 32 is configured to generate scheduling information used for scheduling GTCH resources for performing a trunking service with one or more UEs based on a LTE system; and the first transmitting component 34 is connected to the generating component 32 and configured to transmit the generated scheduling information to the one or more UEs.

Fig. 4 is preferred structural diagram I of a device for processing trunking service according to an embodiment of the present invention. As shown in Fig. 4, the device further includes a first configurating component 42 in addition to all of the components as shown in Fig. 3. The preferred device will be described below.

The first configurating component 42 is connected to the generating component 32 and configured to configure the GTCH resources for performing the trunking service with the one or more UEs.

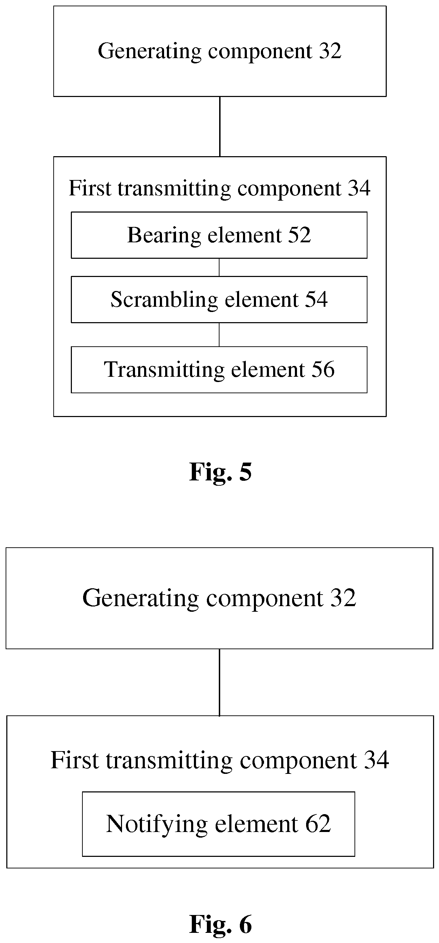

Fig. 5 is preferred structural diagram I of a first transmitting component 34 in the device for processing trunking service according to an embodiment of the present invention. As shown in Fig. 5, the first transmitting component 34 includes a bearing element 52, a scrambling element 54 and a transmitting element 56. The preferred structure will be described below.

The bearing element 52 is configured to bear the scheduling information on a PDCCH; the scrambling element 54 is connected to the bearing element 52 and configured to identify and scramble the PDCCH on which the scheduling information is borne by using a Group-RNTI; and the transmitting element 56 is connected to the scrambling element 54 and configured to transmit the scheduling information to the one or more UEs through the identified and scrambled PDCCH.

Fig. 6 is preferred structural diagram II of a first transmitting component 34 in a device for processing trunking service according to an embodiment of the present invention. As shown in Fig. 6, the first transmitting component 34 includes a notifying element 62. The notifying element 62 is configured to notify the one or more UEs of whether the scheduling information is borne on the PDCCH through a predetermined subframe.

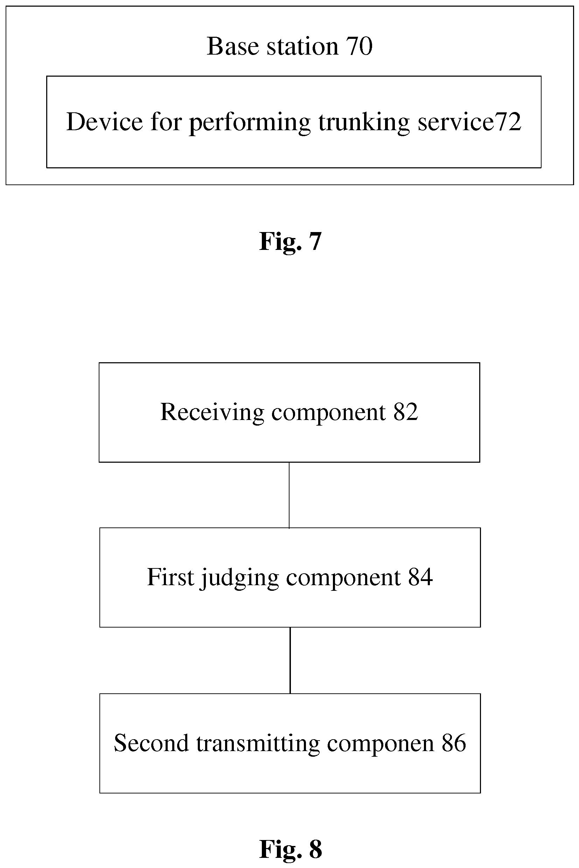

Fig. 7 is a structural diagram of a base station according to an embodiment of the present invention. As shown in Fig. 7, the base station 70 includes the device 72 for processing the trunking service in one of Fig. 3 to Fig. 6.

Fig. 8 is structural diagram II of a device for processing trunking service according to an embodiment of the present invention. As shown in Fig. 8, the device is located in the UE, includes a receiving component 82, a first judging component 84 and a second transmitting component 86. The device will be described below.

The receiving component 82 is configured to receive scheduling information used for scheduling GTCH resources for performing a trunking service with a base station based on a LTE system; the first judging component 84 is connected to the receiving component 82 and configured to judge whether the scheduling information is received successfully, and/or, whether a PDSCH mapped by the GTCH is decoded successfully according to the scheduling information; and the second transmitting component 86 is connected to the first judging component 84 and configured to, in the case where the UE does not receive the scheduling information successfully, and/or the PDSCH mapped by the GTCH is not decoded successfully according to the scheduling information, transmit negative acknowledgment information to the base station.

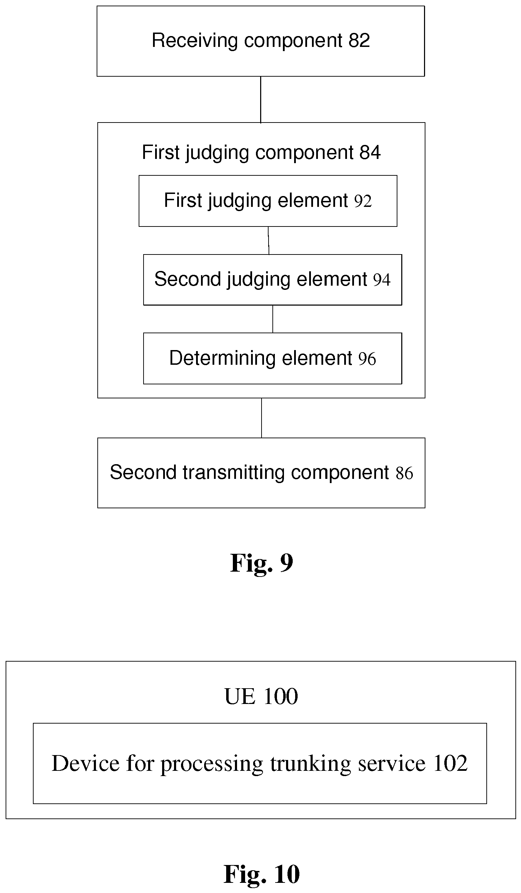

Fig. 9 is a preferred structural diagram of a first judging component 74 in a device for processing trunking service according to an embodiment of the present invention. As shown in Fig. 9, the first judging component includes a first judging element 92, a second judging element 94 and a determining element 96. The first judging component 94 will be described below.

The first judging element 92 is configured to judge whether the base station transmits the scheduling information through a PDCCH identified and scrambled by using a Group-RNTI to the UE, and whether the base station notifies the UE of whether the scheduling information of the GTCH is present in the PDCCH through a predetermined subframe, wherein the scheduling information is borne on the PDCCH; the second judging element 94 is connected to the first judging element 92 and configured to, in the case where the judgment result of the first judging element 92 is that the base station transmits the scheduling information through the PDCCH identified and scrambled by using the Group-RNTI to the UE, and/or the base station notifies the UE of whether the scheduling information of the GTCH is present in the PDCCH through the predetermined subframe, judge whether the scheduling information is received through the PDCCH identified and scrambled by using the Group-RNTI, and/or, whether the PDSCH mapped by the GTCH is decoded successfully according to the scheduling information; and the determining element 96 is connected to the second judging element 94 and configured to, in the case where the judgment result of the second judging element 94 is that the scheduling information is not received through the PDCCH identified and scrambled by using the Group-RNTI, and/or, the PDSCH mapped by the GTCH is not decoded successfully according to the scheduling information, determine that the UE does not receive the scheduling information successfully, and/or that the PDSCH mapped by the GTCH is not decoded successfully according to the scheduling information.

Fig. 10 is a structural diagram of user equipment according to an embodiment of the present invention. As shown in Fig. 10, the UE 100 includes the device for processing trunking service 102 according to one of Fig. 8 to Fig. 9.

The broadband digital trunking communication system and a method for implementing an air interface of a trunking system based on the LTE technology provided by the above embodiments and preferred embodiments not only improve the resource utilization rate greatly, but also improve the capacity of the air interface of a cell beneficially to some extent.

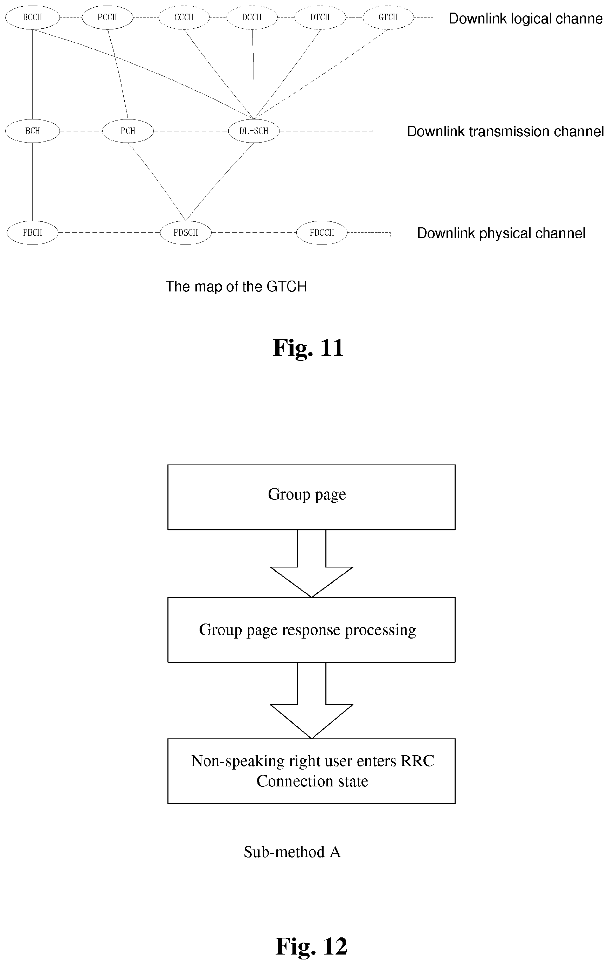

In the method for implementing the trunking service provided by the above embodiments and preferred embodiments, it mainly includes that: the unicast LTE protocol is retained on the basis of the digital communication protocol based on the LTE technology, with respect to the characteristics of point to multipoint of the trunking (downlink) service, a way of processing the trunking service is newly added: for example, a logical channel and a transmission channel for implementing the downlink trunking service are newly added, wherein the logical channel may be the GTCH. Fig. 11 is a schematic diagram of the map of the GTCH according to an embodiment of the present invention. As shown in Fig.

11, the mapping way of the GTCH is: the GTCH -> the Downlink Shared Channel (DL SCH) -> the PDSCH; an HARQ method of a downlink GTCH suitable for point-to-multipoint is newly added; a method for reporting a Channel Quality Indication (CQI) for point-to-multipoint is newly added; a method for generating a Modulation and Coding Scheme (MCS) for point-to-multipoint is newly added, etc.

The method for implementing the trunking service provided by the embodiment includes several parts (or several sub-methods). It should be noted that the above several parts may be a respectively independent part therein, and of course the above several parts may also be combined randomly.

A group establishment sub-method A:

Step 1: A group call speaking right terminal initiates a group call request of Group A, and the eNodeB initiates GroupPage messages of all the non-speaking right terminals in the Group A within a specified GroupPage period.

Step 2: The non-speaking right terminal in the group receives the GroupPage messages and then transmits a PageResponse. Assume that the number of any non-speaking right terminal in the Group A is User[i], after the non-speaking right terminal receives the GroupPage message, the page response message transmitted is PageResponse[i].

Step 3: After the eNodeB receives the PageResponse[i], the eNodeB allocates the following resources to the non-speaking right terminal:

(1) allocates the C-RNTI of the User[i] (corresponding to the Cell RNTI of the 3GPP TS 36.331 protocol), i.e., C-RNTI[i];
(2) allocates the periodically reported resource of the CQI (including: period and report time offset, report mode, position resource reported on the PUCCH or the like), for example, which may be configured through CQI-ReportConfig in the 36.331 protocol;
(3) allocates the channel resource occupied for maintaining the uplink synchronization way and uplink synchronization (there are many ways of maintaining uplink synchronization, for example, a way of initiating Sounding periodically, a way of initiating an SR resource request, a way of reporting the CQI periodically, a way of initiating the PRACH periodically, a way of initiating data or the like);
(4) Group-RNTI (the terminals in the group are allocated the same RNTI).

Step 4: The GTCH of Group A is established, and the GTCH is identified and scheduled by using the Group-RNTI.

Group uplink timing synchronization sub-method B:

Step 1: The terminal maintains uplink synchronization with the eNodeB according to the channel resource occupied for maintaining the uplink synchronization way and uplink synchronization specified by the above sub-method A.
Step 2: The eNodeB transmits a timing advance command periodically, and the terminal adjusts the timing offset of uplink and downlink radio frames, i.e., $N_{TA}$ ($N_{TA}$ in the 36.311 protocol).

CQI reporting and processing sub-method C:

Step 1: The User[i] terminal initiates periodically reporting the CQI in the way of reporting the CQI specified by the eNodeB.
Step 2: In the eNodeB, the MCS of the group GTCH is computed according to a certain algorithm and the CQI[i] reported by each non-speaking right terminal in the group.

Sub-method D for assigning the HARQ resource of the GTCH:

The GTCH performs the HARQ indication (i.e., negative acknowledgment indication), which is borne on the PUCCH, and may also be borne on the PRACH. When the HARQ indication is borne on the PUCCH, Step 1a is adopted, and when the HARQ indication is borne on the PRACH, Step 1 b is adopted.

Step 1 a: Assigning, by the eNodeB, the HARQ resource of the GTCH includes at least one of the following contents:

(1) the eNodeB allocates a transmission format (PUCCH format) of the HARQ ACK/NAK of the GTCH borne on the PUCCH, which may adopt one of format 1, format 1a/1b, and format 2a/2b.
(2) the eNodeB allocates the cyclic shift value ($\Delta_{shift}^{PUCCH}$ in the 3GPP TS36.311 protocol) of the PUCCH for bearing the HARQ ACK/NAK of the GTCH;
(3) the eNodeB decides whether the resource position of the PUCCH for bearing the HARQ ACK/NAK of the GTCH is additionally specified by the eNodeB, or computed according to $n_{CCE}$ ($n_{CCE}$ is the position of the first CCE of the PDCCH, and computed according to the section of UE procedure for determining physical uplink control channel assignment in the 36.213 protocol) of a PDCCH for bearing the scheduling information of the GTCH resource. When the resource position is specified by the eNodeB, the eNodeB should indicate distinctly the resource position of the PUCCH of the HARQ ACK/NAK of the GTCH at each TTI.

Step 1b: assigning, by the eNodeB, the HARQ resource of the GTCH includes at least one of the following contents:

(1) when the indication of whether the GTCH is decoded successfully which is transmitted by the non-speaking right user to the eNodeB is the negative acknowledgment indication, the negative acknowledgment indication triggers transmitting the Preamble of the PRACH;
(2) the eNodeB assigns the same preamble format (preamble format 0~3 in the 36.331 protocol) for bearing the HARQ indication to all the non-speaking right users of the Group A, and the RB specific position of the preamble in the whole uplink bandwidth;
(3) the eNodeB assigns the same preamble index (PreambleIndex of the PRACH in the 36.331 protocol) for bearing the HARQ indication to all the non-speaking right users of the Group A;
(4) the eNodeB assigns a transmission power parameter (such as an initial transmission power parameter) of the preamble for bearing the HARQ indication to all the non-speaking right users of the Group A.

Step 2: The eNodeB allocates the above information and then notifies each non-speaking right terminal of the Group A through the air interface.
Sub-method E for scheduling the group GTCH and the HARQ of the GTCH:

Step 1: When group downlink data arrives, and some subframe X scheduler performs scheduling, the eNodeB generates a scheduling result and resource allocation information to the GTCH of the Group A (including RB position, RB number, MCS or the like). The scheduling result and the resource allocation information are borne on the PDCCH, which is identified and scrambled through Group-RNTI.

It should be noted that, in Step 1, when the GTCH adopts semi-static resource allocation (SPS), the period of the resource allocation information is unchanged.
The sub-method E further includes Step 2:

Step 2: Since it may be possible to exit a packet error when a packet on the PDCCH identified and scrambled through the Group-RNTI is received at the non-speaking right terminal side, in order to ensure that the non-speaking right terminal may know whether the scheduling result and resource allocation information of the GTCH are present on the PDCCH reliably, the eNodeB, on the subframe X, notifies the non-speaking right terminal of whether the PDCCH identified and scrambled by the Group-RNTI of the Group A is present on the subframe X (the scheduling result and resource allocation information of the GTCH is borne). The way in which the eNodeB notifies the non-speaking right terminal of the group on the subframe X may includes the following ways, but is not limited to the following ways:

(1) a Downlink Control Information (DCI) format is constructed, the DCI information includes the group number scheduled on the subframe X, is borne on the PDCCH, and identified and scrambled through a special RNTI;
(2) a resource assignment message is constructed, the resource assignment message includes the group number scheduled on the subframe X, and is borne on the PDSCH.

The non-speaking right terminal judges whether the PDCCH identified and scrambled by the Group-RNTI of the Group A is present on the subframe X (the scheduling result and resource allocation information of the GTCH is borne). When the PDCCH is present, it is considered that the condition M is affirmative, and when the PDCCH is not present, the condition M is negative.
Step 3: The non-speaking right terminal searches the PDCCH identified and scrambled by the Group-RNTI within the PDCCH search space range, and a decision is made according to the decision rule as follows:

With respect to Step 1, when the PDCCH identified and scrambled by the Group-RNTI is present on the subframe X, the condition P is affirmative. When the PDCCH identified and scrambled by the Group-RNTI is not present on the subframe X, the condition P is negative.

When the condition P is affirmative, the PDSCH mapped by the GTCH is decoded according to the resource allocation information of the PDCCH. When the PDSCH mapped by the GTCH is decoded successfully (the CRC is decoded successfully), the condition Z is affirmative. When the PDSCH mapped by the GTCH is not decoded successfully (the CRC is not decoded successfully), the condition Z is negative.
When Step 2 is present, the decision is made as follows:

When the condition M of Step 2 is affirmative, but the condition P is negative, the condition Z is negative.

According to the above decision, when the condition Z is affirmative, Step 4 does not need to be executed, and when the condition Z is negative, Step 4 needs to be executed. When Step 4 needs to be executed, the non-speaking right terminal considers that the GTCH of the Group A is present on the subframe X, but the non-speaking right terminal does not decode the GTCH of the Group A successfully, and the non-speaking right terminal needs to transmit an NACK feedback of the GTCH to the eNodeB.

There are multiple non-speaking right terminals of the group in the cell. Any terminal in the group bears the PUCCH of the NACK of the GTCH or feeds back NACK on the PRACH, the eNodeB considers that at least one non-speaking right terminal is not received successfully during the scheduling and needs to be retransmitted.

Step 4: The NACK corresponding to the GTCH may be borne on the PUCCH, and may also be borne on the PRACH.

When the HARQ indication is borne on the PUCCH, the terminal fed back the NACK corresponding to the GTCH on the PUCCH. The format of the PUCCH may be specified by using Step 1a of the above sub-method D, the cyclic shift value of the PUCCH may be specified by using Step 1a of the above sub-method D, and the resource position of the PUCCH may be specified by using Step 1a of the above sub-method D.

When the HARQ indication is borne on the PRACH, the Preamble transmission method and parameter of the PRACH are specified through Step 1b of the above sub-method D.

Step 5: The eNodeB tries to receive the NACK on the PUCCH on which the NAK corresponding to the GTCH is borne or tries to capture the Preamble of the NAK corresponding to the GTCH, when the NACK is present, it is considered that retransmission is needed, and the eNodeB performs retransmitting on the GTCH of the Group A. Otherwise, the retransmission is not needed.

For the sub-method A, sub-method B, sub-method C, sub-method D and sub-method E described above, each sub-method may be implemented by a separately formed function. The above sub-methods may also be combined without any conflict.

It should be noted that, the above single or combined embodiments and preferred embodiments are not only suitable for the case where the number of the non-speaking right users of the group in the cell is appropriate, but also suitable for the case where there are many non-speaking right users of the group in the cell. For those skilled in the art, the above and other objects, features and advantages of the embodiments of the present invention are apparent from the detailed description of the embodiments of the present invention.

Each single sub-method and the combination of each sub-method will be described in detail below.

Group establishment sub-method A: Fig. 12 is a schematic diagram of a group establishment method according to an embodiment of the present invention. As shown in Fig. 12, the group establishment generally includes: a group page process, a group page response processing process and non-speaking right user entering an RRC connection state, specifically may include the following steps.

Step 1: A group call speaking right terminal initiates a group call request of Group A, and the eNodeB initiates the GroupPage messages of all the non-speaking right terminals in the Group A within a specified group page period.

Step 2: The non-speaking right terminal in the group receives the GroupPage messages and then transmits a PageResponse. Assume that the number of any non-speaking right terminal in the Group A is User[i], after the non-speaking right terminal receives a page message, the page response message transmitted is PageResponse[i].

Step 3: After the eNodeB receives the PageResponse[i], the eNodeB allocates the following resources to the non-speaking right terminal:

(1) allocates the C-RNTI of the User[i] (corresponding to the Cell RNTI of the 3GPP TS 36.331 protocol, each in the cell), i.e., C-RNTI[i];
(2) allocates the periodically reported resource of the CQI (including: period and report time offset, report mode, position resource reported on the PUCCH or the like), for example, which may be configured through CQI-ReportConfig in the 36.213 protocol;
(3) allocates the channel resource occupied for maintaining the uplink synchronization way and uplink synchronization (there are many ways of maintaining uplink synchronization, for example, a way of initiating Sounding periodically, a way of initiating an SR resource request, a way of reporting the CQI periodically, a way of initiating the PRACH periodically, a way of initiating data or the like);
(4) Group-RNTI (the terminals in the group are allocated the same RNTI).

After the above resources are allocated, the eNodeB and the User[i] establish the RRC CONNECTION, and the eNodeB assigns the above allocated information to each non-speaking right terminal of Group A through the air interface.

Step 4: The GTCH of the Group A is established, and the GTCH is identified and scheduled by using the Group-RNTI.

Step 5: The User[i] enters the RRC CONNECTION STATE, and may perform the following sub-method B, sub-method C, sub-method D and sub-method E at the same time.

Group uplink timing synchronization sub-method B:

Step 1: The UE maintains uplink timing synchronization with the eNodeB according to one of the following methods. There are many ways of maintaining uplink synchronization, for example, a way of initiating Sounding periodically, a way of initiating data periodically, a way of initiating an SR resource request, a way of reporting the CQI periodically, a way of initiating the PRACH periodically.

Step 2: The eNodeB transmits a timing advance command periodically, and the terminal adjusts the timing offset of uplink and downlink radio frames, i.e., $N_{TA}$ ($N_{TA}$ in the 36.311 protocol).

CQI reporting and processing sub-method C:

Step 1: The User[i] terminal initiates periodically reporting the CQI in the way of reporting the CQI specified by the eNodeB.
Step 2: In the Group A, the MCS[A] of the group is computed according to a certain algorithm and the CQI[i] reported by each non-speaking right terminal in the group, wherein MCS[A] is used for modulating and coding the GTCH.

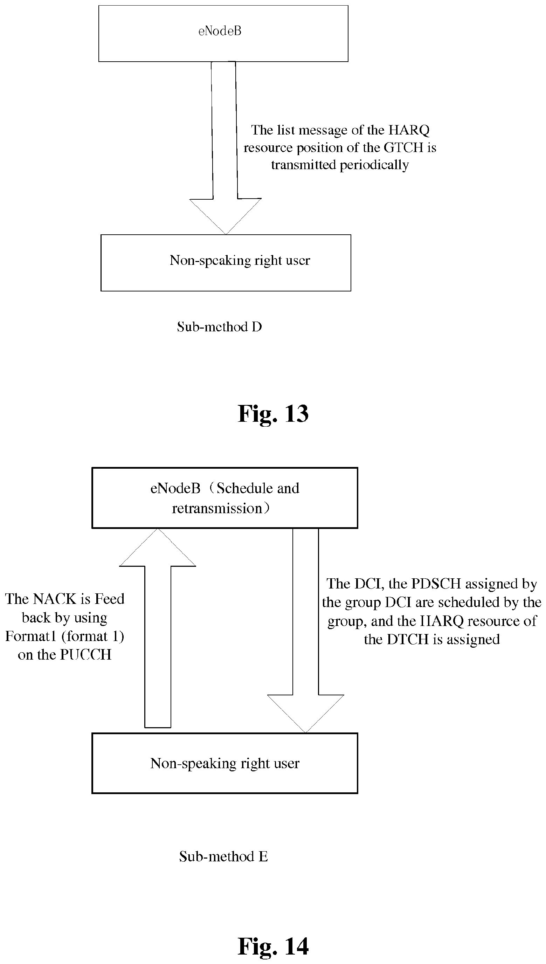

Sub-method D for assigning the HARQ resource of the group GTCH, Fig. 13 is a schematic diagram in which a base station assigns an HARQ resource of a group GTCH to a non-speaking right user according to an embodiment of the present invention. As shown in Fig. 13, the base station transmits a list message of the HARQ resource position of the GTCH to the non-speaking right user. For example, transmitting, by the eNodeB, a GroupDLHARQResourceParameter message through the air interface periodically may include:

(1) NormalDLHARQWay: when NormalDLHARQWay is 1, the source of the PUCCH occupied by the HARQ of the group GTCH is computed by using a PUCCH resource computation method in the 36.213 protocol according to $n_{CCE}$ ($n_{CCE}$ is the position of the first CCE of the PDCCH, and computed according to the section of UE procedure for determining physical uplink control channel assignment in the 36.213 protocol) of a PDCCH for bearing the scheduling information of the GTCH resource.
When NormalDLHARQWay is 0, the source of the PUCCH occupied by the HARQ of the group GTCH is computed by using another specified method, i.e., by using the method of the sub-method E in the above embodiment.
(2) deltaGroupPUCCHShift: specify the cyclic shift value for performing PUCCH Format1/1a/1b at the time of downlink HARQ of the group GTCH.
(3) GroupDLHARQPUCCHFormat: the PUCCH format at the time of downlink HARQ of the group, Format 1 is adopted in the embodiment.
(4) The HARQ resource position and the HARQ resource position number of the group GTCH: The resource position represents the RB position where the PUCCH of the GTCH HARQ is borne, and Format1 is adopted in the embodiment. By using similar SR Request method, when it is NACK, the information bit d(0) of the Format1 of the PUCCH is 1 (specifically see 36.211). When it is ACK, the Format1 of the PUCCH does not be used to transmit any signal. The method for transmitting a GroupDLHARQResourceParameter message includes the following methods, but is not limited to the following methods: similar to the method for transmitting the System information, transmitting periodically.

Sub-method E for group GTCH scheduling and HARQ: Fig. 14 is a schematic diagram in which a base station performs group GTCH scheduling and HARQ to a non-speaking right user according to an embodiment of the present invention. As shown in Fig. 14, the processing includes that: the base station transmits the DCI scheduled by the group and the PDSCH assigned by the group DCI, the HARQ resource for assigning the DTCH, and the non-speaking right user feeds back the negative acknowledgment (NACK) by using Parmat1 format on the PUCCH. For example, the processing may include the following steps:

Step 1: When group downlink data arrives, and some subframe X scheduler performs scheduling, the eNodeB generates a scheduling result to the Group A (including RB position, RB number, MCS or the like). The scheduling result is borne in the DCI, the format of the DCI is not limited. Assume DCI Y is issued through the PDCCH, and the PDCCH is scrambled and identified through the Group-RNTI. Step 1: When group downlink data arrives, and some subframe X scheduler performs scheduling, the eNodeB generates a scheduling result and resource allocation information to the GTCH of the Group A (including RB position, RB number, MCS or the like). The scheduling result and the resource allocation information are borne through the PDCCH, which is identified and scrambled through Group-RNTI.

It should be noted that, in Step 1, when the GTCH adopts semi-static resource allocation, the period of the resource allocation information is unchanged.
The sub-method E further includes Step 2:

Step 2: Since it may be possible to exit a packet error when a packet on the PDCCH identified and scrambled through the Group-RNTI is received at the non-speaking right terminal side, in order to ensure that the non-speaking right terminal may know whether the scheduling result and resource allocation information of the GTCH are present on the PDCCH reliably, the eNodeB, on the subframe X, notifies the non-speaking right terminal of whether the PDCCH identified and scrambled by the Group-RNTI of the Group A is present on the subframe X (the scheduling result and resource allocation information of the GTCH is borne). The way in which the eNodeB notifies the non-speaking right terminal of the group on the subframe X may includes the following ways:

Step 2a: When some subframe X is scheduled, a DCI format is constructed. Assume the DCI format is DCI 1G, the DCI 1G may be an existing DCI format or a new DCI format in the 36.212 protocol. The contents in the DCI format contain the group number scheduled on the subframe X and DLHARQ resource number in the Group-DLHARQResourceParameter message corresponding to the scheduled group, which are scrambled through the group-common Group-RNTI, placed in the common search space in the position of the PDCCH and transmitted in the PDCCH. And it is specified that the HARQ resource number is used in the DCI 1G.

Step 2b: When some subframe X is scheduled, a GroupDLHARQ resource assignment message is constructed. The GroupDLHARQ resource assignment message contains the group number scheduled on the subframe X and DLHARQ resource position number in the Group-DLHARQResourceParameter message corresponding to the scheduled group. The Group-DLHARQ resource assignment message is borne and transmitted through the PDSCH.

Step 2a or Step 2b is executed. The non-speaking right terminal judges whether the PDCCH identified and scrambled by the Group-RNTI of the Group A is present on the subframe X (the scheduling result and resource allocation information of the GTCH is borne). When the PDCCH is present, it is considered that the condition M is affirmative, and when the PDCCH is not present, the condition M is negative.

Step 3: The non-speaking right terminal searches the PDCCH identified and scrambled by the Group-RNTI within the PDCCH search space range, and a decision is made according to the decision rule as follows:

> When the PDCCH identified and scrambled by the Group-RNTI is present on the subframe X, the condition P is affirmative. When the PDCCH identified and scrambled by the Group-RNTI is not present on the subframe X, the condition P is negative.

When the condition P is affirmative, the PDSCH mapped by the GTCH is decoded according to the resource allocation information of the PDCCH. When the PDSCH mapped by the GTCH is decoded successfully (the CRC is decoded successfully), the condition Z is affirmative. When the PDSCH mapped by the GTCH is not decoded successfully (the CRC is not decoded successfully), the condition Z is negative.

When Step 2 is present, the decision is made as follows: when the condition M of Step 2 is affirmative, but the condition P is negative, the condition Z is negative.

According to the above decision, when the condition Z is affirmative, Step 4 does not need to be executed, and when the condition Z is negative, Step 4 needs to be executed. When Step 4 needs to be executed, the non-speaking right terminal considers that the GTCH of the Group A is present on the subframe X, but the non-speaking right terminal does not decode the GTCH of the Group A successfully, and the non-speaking right terminal needs to transmit an NACK feedback of the GTCH to the eNodeB.

There are multiple non-speaking right terminals of the group in the cell. Any terminal in the group bears the PUCCH of the NACK of the GTCH or feeds back NACK on the PRACH, the eNodeB considers that at least one non-speaking right terminal is not received successfully during the scheduling and needs to be retransmitted.

Step 4: The NACK is borne on the PUCCH according to the format indicated in the GroupDLHARQResourceParameter message, the group resource number indicated in Step 2 of the above sub-method E is adopted, the resource position mapped through the resource number represents the RB position and the PUCCH format of the PUCCH, and the PUCCH resource.

When NACK is transmitted, d(0)=1, NACK is transmitted by using PUCCH Format1. When NormalDLHARQWay is 0, $n_{\text{PUCCH}}^{(1,\tilde{p})}$ value corresponding to the group resource number is found in the GroupDLHARQResourceParameter message according to the group resource number of Step 2 of the sub-method, the deltaGroupPUCCHShift value is used in the $\Delta_{\text{shift}}^{\text{PUCCH}}$, and the NACK is transmitted through the Format1 of the PUCCH.

When NACK is transmitted, d(0)=1, NACK is transmitted by using PUCCH Format1. When NormalDLHARQWay is 1, $n_{\text{PUCCH}}^{(1,\tilde{p})}$ value is computed according to the method in the 36.213 protocol, the deltaGroupPUCCHShift value is used in the $\Delta_{\text{shift}}^{\text{PUCCH}}$, and the NACK is transmitted through the Format1 of the PUCCH.

Step 5: The eNodeB tries to receive the NACK on the PUCCH on which the NAK corresponding to the GTCH is borne, when the NACK is present, it is considered that retransmission is needed, and the eNodeB retransmits the GTCH of the Group A. Otherwise, the retransmission is not needed.

Through the above embodiments and preferred embodiments, call establishment time can not only be shortened, but also the resource utilization rate can be improved.

Obviously, those skilled in the art should understand that each of the mentioned modules or steps of the present invention may be achieved by a universal computing apparatus; the modules or steps may be integrated on a single computing apparatus, or distributed in a network formed by multiple computing apparatuses. Selectively, they may be achieved by a program code which may be executed by the computing apparatus. Thereby, the modules or steps may be stored in a storage apparatus and executed by the computing apparatus, and in some cases, the steps shown or described may be executed in an order different from here, or may be respectively manufactured as each integrated circuit module, or multiple modules or steps thereof may be manufactured as single integrated circuit module. In this way, the present invention is not limited to any particular combination of hardware and software.

**Claims**

1. A method for processing trunking service, comprising:

   configuring, by a base station (70), Group Trunking Channel, GTCH, resources for performing a trunking service with one or more UEs;
   generating (S502), by the base station (70), scheduling information used for scheduling the GTCH resources based on a Long Term Evolution, LTE, system; and
   transmitting (S104), by the base station (70), the generated scheduling information to the one or more UEs;
   **characterised in that** configuring, by the base station (70), Group Trunking Channel, GTCH, resources for performing the trunking service with the one or more UEs, comprises:
   allocating to the one or more UEs, by the base station (70), a resource for a Hybrid Automatic Repeat Request, HARQ, being performed for the GTCH, wherein an indication for indicating that the HARQ is performed is borne on a Physical Uplink Control Channel, PUCCH, or a Physical Random Access Channel, PRACH.

2. The method according to claim 1, **characterized in that** configuring, by the base station (70), the GTCH resources for performing the trunking service with one or more UEs further comprises at least one of:

   allocating, by the base station (70), a Cell-Radio Network Temporary Identifier (C-RNTI) to the one or more UEs;
   allocating, by the base station (70), a periodically reported resource to the one or more UEs;
   allocating, by the base station (70), a channel resource occupied for maintaining an uplink synchronization way and/or uplink synchronization to the one or more UEs; and
   allocating, by the base station (70), a Group-Radio Network Temporary Identifier (Group-RNTI) to the one or more UEs.

3. The method according to claim 1, **characterized in that**
   based on that the indication for indicating that the HARQ is performed is borne on the PUCCH, allocating, by the base station (70), the resource for the HARQ being performed on the GTCH to the one or more UEs comprises at least one of the following: allocating, by the base station (70), a transmission format of an HARQ acknowledgement/negative acknowledgment on the GTCH to the one or more UEs; allocating, by the base station (70), a cyclic shift value of an HARQ acknowledgement/negative acknowledgment on the GTCH to the one or more UEs; allocating, by the base station (70), a resource position of the HARQ on the GTCH within each Transmission Time Interval, TTI, to the one or more UEs; or based on that the indication for indicating that the HARQ is performed is borne on the PRACH, allocating, by the base station (70), the resource for the HARQ being performed on the GTCH to the one or more UEs comprises at least one of the following: a preamble format of the PRACH, a spectrum position of a preamble of the PRACH, and a preamble index of a preamble of the PRACH.

4. The method according to claim 1, **characterized in that** transmitting, by the base station (70), the scheduling information to the one or more UEs comprises:

   bearing, by the base station (70), the scheduling information on a Physical Downlink Control Channel, PDCCH;
   identifying and scrambling, by the base station (70), the PDCCH on which the scheduling information is borne by using the Group-RNTI; and
   transmitting, by the base station (70), the scheduling information to the one or more UEs through the identified and scrambled PDCCH.

5. The method according to claim 4, **characterized in that** transmitting, by the base station (70), the scheduling information to the one or more UEs comprises:

   notifying, by the base station (70), the one or more UEs of whether the scheduling information is borne on the PDCCH through a predetermined subframe.

6. The method according to claim 1, **characterized in that** after the base station (70) transmits the generated scheduling information to the one or more UEs, the method further comprises:

   based on that negative acknowledgment information from the one or more UEs are received, the base station (70) retransmits the scheduling information of the GTCH.

7. A method for processing trunking service, comprising:

   receiving, by a User Equipment, UE, Group Trunking Channel, GTCH, resources for performing a trunking service from a base station (70);

receiving, by the UE scheduling information used for scheduling the GTCH resources for performing the trunking service with the base station (70) based on a Long Term Evolution, LTE, system (S202);

judging, by the UE, whether the scheduling information is received successfully, and/or, whether a Physical Downlink Shared Channel, PDSCH, mapped by the GTCH is decoded successfully according to the scheduling information (S204); and

based on that the UE does not receive the scheduling information successfully, and/or the PDSCH mapped by the GTCH is not decoded successfully according to the scheduling information, transmitting, by the UE, negative acknowledgment information to the base station (S206);

**characterised in that** receiving the GTCH resources comprises:

receiving a resource, allocated by the base station (70), for a Hybrid Automatic Repeat Request, HARQ, being performed for the GTCH, wherein an indication for indicating that the HARQ is performed is borne on a Physical Uplink Control Channel, PUCCH, or a Physical Random Access Channel, PRACH.

8. The method according to claim 7, **characterized in that** judging, by the UE, whether the scheduling information is received successfully, and/or, whether the PDSCH mapped by the GTCH is decoded successfully according to the scheduling information comprises:

judging, by the UE, whether the base station transmits the scheduling information through a Physical Downlink Control Channel, PDCCH, identified and scrambled by using a Group-Radio Network Temporary Identifier, Group-RNTI, to the UE, and whether the base station (70) notifies the UE of whether the scheduling information of the GTCH is present in the PDCCH through a predetermined subframe, wherein the scheduling information is borne on the PDCCH; based on that a judgment result is that the base station (70) transmits the scheduling information through the PDCCH identified and scrambled by using the Group-RNTI to the UE, and the base station (70) notifies the UE of whether the scheduling information of the GTCH is present in the PDCCH through the predetermined subframe, judging, by the UE, whether the scheduling information is received through the PDCCH identified and scrambled by using the Group-RNTI, and/or, whether the PDSCH mapped by the GTCH is decoded successfully according to the scheduling information; and

based on that the judgment result is that the scheduling information is not received through the PDCCH identified and scrambled by using the Group-RNTI, and/or, the PDSCH mapped by the GTCH is not decoded successfully according to the scheduling information, it is determined that the UE does not receive the scheduling information successfully, and/or that the PDSCH mapped by the GTCH is not decoded successfully according to the scheduling information.

9. A base station (70), comprising:

a generating component (32), configured to generate scheduling information used for scheduling Group Trunking Channel, GTCH, resources for performing a trunking service with one or more User Equipments, UEs, based on a Long Term Evolution, LTE, system; and
a first transmitting component (34), configured to transmit the generated scheduling information to the one or more UEs;
a first configurating component (42), configured to configure the GTCH resources for performing the trunking service with the one or more UEs;
**characterised by** the configurating component further configured to allocate a resource to the one or more Ues for a Hybrid Automatic Repeat Request, HARQ, being performed for the GTCH, wherein an indication for indicating that the HARQ is performed is borne on a Physical Uplink Control Channel, PUCCH, or a Physical Random Access Channel, PRACH.

10. The base station (70) according to claim 9, **characterized in that** the first transmitting component (34) comprises:

a bearing element (52), configured to bear the scheduling information on a Physical Downlink Control Channel, PDCCH;
a scrambling element (54), configured to identify and scramble the PDCCH on which the scheduling information is borne by using a Group-Radio Network Temporary Identifier, Group-RNTI; and
a transmitting element (56), configured to transmit the scheduling information to the one or more UEs through the identified and scrambled PDCCH.

11. The base station (70) according to claim 9, **charac-**

**terized in that** the first transmitting component (34) comprises:

a notifying element (62), configured to notify the one or more UEs of whether the scheduling information is borne on the PDCCH through a predetermined subframe.

12. A User equipment (100), UE, comprising:

a receiving component (82), configured to receive scheduling information used for scheduling Group Trunking Channel, GTCH, resources for performing a trunking service with a base station (70) based on a Long Term Evolution, LTE, system;
a first judging component (84), configured to judge whether the scheduling information is received successfully, and/or, whether a Physical Downlink Shared Channel, PDSCH, mapped by the GTCH is decoded successfully according to the scheduling information; and
a second transmitting component (86), configured to, based on that the UE (100) does not receive the scheduling information successfully, and/or the PDSCH mapped by the GTCH is not decoded successfully according to the scheduling information, transmit negative acknowledgment information to the base station (70);
**characterised in that** the GTCH resources comprise a resource, allocated by the base station (70), for a Hybrid Automatic Repeat Request, HARQ, being performed for the GTCH, wherein an indication for indicating that the HARQ is performed is borne on a Physical Uplink Control Channel, PUCCH, or a Physical Random Access Channel, PRACH.

13. The UE (100) according to claim 12, **characterized in that** the first judging component (84) comprises:

a first judging element (92), configured to judge whether the base station (70) transmits the scheduling information through a Physical Downlink Control Channel, PDCCH, identified and scrambled by using a Group-Radio Network Temporary Identifier, Group-RNTI, to the UE, and whether the base station (70) notifies the UE (100) of whether the scheduling information of the GTCH is present in the PDCCH through a predetermined subframe, wherein the scheduling information is borne on the PDCCH;
a second judging element (94), configured to, based on that a judgment result of the first judging element (92) is that the base station (70) transmits the scheduling information through the PDCCH identified and scrambled by using the Group-RNTI to the UE (100), and the base station (70) notifies the UE (100) of whether the scheduling information of the GTCH is present in the PDCCH through the predetermined subframe, judge whether the scheduling information is received through the PDCCH identified and scrambled by using the Group-RNTI, and/or, whether the PDSCH mapped by the GTCH is decoded successfully according to the scheduling information; and
a determining element (96), configured to, based on that the judgment result of the second judging element (94) is that the scheduling information is not received through the PDCCH identified and scrambled by using the Group-RNTI, and/or, the PDSCH mapped by the GTCH is not decoded successfully according to the scheduling information, determine that the UE (100) does not receive the scheduling information successfully, and/or that the PDSCH mapped by the GTCH is not decoded successfully according to the scheduling information.

**Patentansprüche**

1. Verfahren zum Verarbeiten eines Bündelfunkdienstes, umfassend: durch eine Basisstation (70), Konfigurieren von Gruppenbündelungskanalressourcen (GTCH-Ressourcen) (GTCH = Group Trunking Channel) zum Durchführen eines Bündelfunkdienstes mit einer oder mehreren Benutzergeräten (UE) (UE = User Equipment);
durch die Basisstation (70), Erzeugen (S502) von Planungsinformationen, die zum Planen der GTCH-Ressourcen auf der Grundlage eines Long-Term-Evolution-Systems (LTE-Systems); und
durch die Basisstation (70), Übertragen (S104) der erzeugten Planungsinformationen zu dem einen oder den mehreren UEs;
**dadurch gekennzeichnet, dass** das Konfigurieren von Gruppenbündelungskanalressourcen (GTCH-Ressourcen) durch die Basisstation (70) zum Durchführen des Bündelfunkdienstes mit dem einen oder den mehreren UEs Folgendes umfasst:

Zuteilen einer Ressource für eine hybride automatische Wiederholungsanforderung (Hybrid Automatic Repeat Request, HARQ) zu dem einen oder den mehreren UE durch die Basisstation (70) für den GTCH, wobei eine Angabe zum Anzeigen, dass die HARQ durchgeführt wird, auf einem physischen Uplink-Steuerkanal (Physical Uplink Control Channel, PUCCH) oder einem physischen Direktzugriffskanal (Physical Random Access Channel, PRACH) transportiert wird.

2. Verfahren nach Anspruch 1, **dadurch gekenn-**

**zeichnet, dass** das Konfigurieren der GTCH-Ressourcen zum Durchführen des Bündelfunkdienstes mit einer oder mehreren UEs durch die Basisstation (70) ferner mindestens eines von Folgendem umfasst:

Zuteilen einer zeitweiligen Funkzellen-Netzkennung (Cell-Radio Network Temporary Identifier, C-RNTI) zu dem einen oder den mehreren UEs durch die Basisstation (70);
Zuteilen einer in regelmäßigen Abständen gemeldeten Ressource zu dem einen oder den mehreren UEs durch die Basisstation (70);
durch die Basisstation (70), Zuteilen einer Kanalressource, die zum Aufrechterhalten eines Uplink-Synchronisationsweges und/oder einer Uplink-Synchronisation zu der einen oder den mehreren UEs belegt ist; und
durch die Basisstation (70), Zuteilen einer zeitweiligen Gruppenfunknetzkennung (Group Radio Network Temporary Identifier, Group-RNTI) zu dem einen oder den mehreren UEs.

3.  Verfahren nach Anspruch 1, **dadurch gekennzeichnet, dass**
auf der Grundlage, dass die Angabe zum Anzeigen, dass die HARQ durchgeführt wird, auf dem PUCCH transportiert wird, das Zuteilen der Ressource für die auf dem GTCH durchgeführte HARQ zu dem einen oder den mehreren UEs durch die Basisstation (70) mindestens eines aus Folgendem umfasst: Zuteilen eines Übertragungsformats einer HARQ-Bestätigung/negativen HARQ-Bestätigung auf dem GTCH zu der einen oder den mehreren UEs durch die Basisstation (70); Zuteilen eines zyklischen Verschiebewerts einer HARQ-Bestätigung/negativen HARQ-Bestätigung auf dem GTCH zu der einen oder den mehreren UEs durch die Basisstation (70);
durch die Basisstation (70), Zuteilen einer Ressourcenposition der HARQ auf dem GTCH innerhalb jedes Übertragungszeitintervalls (Transmission Time Interval, TTI) zu dem einen oder den mehreren UEs; oder
auf der Grundlage, dass die Angabe zum Anzeigen, dass die HARQ durchgeführt wird, auf dem PRACH transportiert wird, das Zuteilen der Ressource für die auf dem GTCH durchgeführte HARQ zu dem einen oder den mehreren UEs durch die Basisstation (70) mindestens eines aus Folgendem umfasst: ein Präambelformat des PRACH, eine Spektrumposition einer Präambel des PRACH und einen Präambelindex einer Präambel des PRACH.

4.  Verfahren nach Anspruch 1, **dadurch gekennzeichnet, dass** das Übertragen der Planungsinformationen zu dem einen oder den mehreren UEs durch die Basisstation (70) Folgendes umfasst:

Transportieren der Planungsinformationen auf einem physischen Downlink-Steuerkanal (Physical Downlink Control Channel, PDCCH) durch die Basisstation (70);
durch die Basisstation (70), Kennzeichnen und Verschlüsseln des PDCCH, auf dem die Planungsinformationen unter Verwendung der Group-RNTI transportiert werden; und
durch die Basisstation (70), Übertragen der Planungsinformationen zu dem einen oder den mehreren UEs über den gekennzeichneten und verschlüsselten PDCCH.

5.  Verfahren nach Anspruch 4, **dadurch gekennzeichnet, dass** das Übertragen der Planungsinformationen zu dem einen oder den mehreren UEs durch die Basisstation (70) Folgendes umfasst:

durch die Basisstation (70), Benachrichtigen der einen oder der mehreren UEs, ob die Planungsinformationen auf dem PDCCH über einen vorgegebenen Teilrahmen übertragen werden.

6.  Verfahren nach Anspruch 1, **dadurch gekennzeichnet, dass** das Verfahren nach der Übertragung der erzeugten Planungsinformationen durch die Basisstation (70) an das eine oder die mehreren UEs ferner Folgendes umfasst:

erneutes Übertragen der Planungsinformationen des GTCH durch die Basisstation (70) auf der Grundlage dieser negativen Bestätigungsinformation von dem einen oder den mehreren UEs.

7.  Verfahren zum Verarbeiten eines Bündelfunkdienstes, umfassend:

durch ein Benutzergerät (UE), Empfangen von Gruppenbündelungskanalressourcen (GTCH-Ressourcen) von einer Basisstation (70) zum Durchführen eines Bündelfunkdienstes;
durch das UE, Empfangen von Planungsinformationen, die zum Planen der GTCH-Ressourcen zum Durchführen des Bündelfunkdienstes mit der Basisstation (70) auf der Grundlage eines Long-Term-Evolution-Systems (LTE-Systems) verwendet werden (S202);
Beurteilen durch das UE, ob die Planungsinformationen erfolgreich empfangen werden, und/oder, ob ein durch den GTCH zugeordneter physischer gemeinsam genutzter Downlink-Kanal (Physical Downlink Shared Channel, PDSCH) entsprechend der Planungsinformation erfolgreich decodiert wird (S204); und
durch das UE, Übertragen negativer Bestätigungsinformationen zur Basisstation (S206) auf der Grundlage, dass das UE die Planungsinformationen nicht erfolgreich empfängt und/oder der durch den GTCH zugeordnete PDSCH gemäß den Planungsinformationen nicht erfolgreich decodiert wird;

**dadurch gekennzeichnet, dass** das Empfangen der GTCH-Ressourcen Folgendes umfasst:

Empfangen einer von der Basisstation (70) zugeteilten Ressource für eine hybride automatische Wiederholungsanforderung (HARQ), die für den GTCH durchgeführt wird, wobei eine Angabe zum Anzeigen, dass die HARQ durchgeführt wird, auf einem physischen Uplink-Steuerkanal (PUCCH) oder einem physischen Direktzugriffskanal (PRACH) transportiert wird.

8. Verfahren nach Anspruch 7, **dadurch gekennzeichnet, dass** durch das UE beurteilt wird, ob die Planungsinformationen erfolgreich empfangen werden, und/oder, ob der durch den GTCH zugeordnete PDSCH gemäß der Planungsinformation erfolgreich decodiert wird, wobei das Verfahren Folgendes umfasst:

Beurteilen durch das UE, ob die Basisstation die Planungsinformationen über einen physischen Downlink-Steuerkanal (PDCCH), der unter Verwendung einer zeitweiligen Gruppenfunknetzkennung (Group-RNTI) gekennzeichnet und verschlüsselt wird, zum UE überträgt und ob die Basisstation (70) dem UE mitteilt, ob die Planungsinformationen des GTCH über einen vorgegebenen Teilrahmen im PDCCH vorliegen, wobei die Planungsinformationen auf dem PDCCH transportiert werden; auf der Grundlage eines Beurteilungsergebnisses, dass die Basisstation (70) die Planungsinformationen zum UE über den PDCCH überträgt, der unter Verwendung der Group-RNTI gekennzeichnet und verschlüsselt wird, und die Basisstation (70) dem UE mitteilt, ob die Planungsinformationen des GTCH über den vorgegebenen Teilrahmen im PDCCH vorliegen, Beurteilen durch das UE, ob die Planungsinformationen über den PDCCH empfangen worden, der unter Verwendung der Group-RNTI gekennzeichnet und verschlüsselt wird, und/oder, ob der durch den GTCH zugeordnete PDSCH gemäß der Planungsinformation erfolgreich decodiert wird; und auf der Grundlage des Beurteilungsergebnisses, dass die Planungsfunktionen nicht über den PDCCH empfangen werden, der unter Verwendung der Group-RNTI gekennzeichnet und verschlüsselt wird und/oder der durch den GTCH zugeordnete PDSCH gemäß den Planungsinformationen nicht decodiert wird, Feststellen, dass das UE die Planungsinformationen nicht erfolgreich empfängt und/oder der durch den GTCH zugeordnete PDSCH gemäß den Planungsinformationen nicht erfolgreich decodiert wird.

9. Basisstation (70), umfassend:

eine Erzeugungskomponente (32), die so gestaltet ist, dass Planungsinformationen erzeugt werden, die zum Planen von Gruppenbündelungskanalressourcen (GTCH-Ressourcen) zum Durchführen eines Bündelfunkdienstes mit einem oder mehreren Benutzergeräten (UEs) auf der Grundlage eines Long-Term-Evolution-Systems (LTE-System) verwendet werden; und eine erste Übertragungskomponente (34), die so gestaltet ist, dass die erzeugten Planungsinformationen zu den einen oder den mehreren UEs übertragen werden; eine erste Konfigurationskomponente (42), die so gestaltet ist, dass die GTCH-Ressourcen zum Ausführen des Bündelfunkdienstes mit dem einen oder den mehreren UEs konfiguriert werden;

**dadurch gekennzeichnet, dass** die Konfigurationskomponente ferner so gestaltet ist, dass dem einen oder den mehreren UEs eine Ressource für eine hybride automatische Wiederholungsanforderung (HARQ) zugeteilt wird, die für den GTCH durchgeführt wird, wobei eine Angabe zum Anzeigen, dass die HARQ durchgeführt wird, auf einem physischen Uplink-Steuerkanal (PUCCH) oder einem physischen Direktzugriffskanal (PRACH) transportiert wird.

10. Basisstation (70) nach Anspruch 9, **dadurch gekennzeichnet, dass** die erste Übertragungskomponente (34) Folgendes umfasst:

ein Transportelement (52), das so gestaltet ist, dass die Planungsinformationen auf einem physischen Downlink-Steuerkanal (PDCCH) transportiert werden; ein Verschlüsselungselement (54), das gestaltet ist, um den PDCCH zu kennzeichnen, auf dem die Planungsinformationen unter Verwendung einer zeitweiligen Gruppenfunknetzkennung (Group-RNTI) transportiert werden; und ein Übertragungselement (56), das so gestaltet ist, dass die Planungsinformationen über den gekennzeichneten und verschlüsselten PDCCH zu dem einen oder dem mehreren UEs übertragen werden.

11. Basisstation (70) nach Anspruch 9, **dadurch gekennzeichnet, dass** die erste Übertragungskomponente (34) Folgendes umfasst:

ein Benachrichtigungselement (62), das so gestaltet ist, dass das eine oder die mehreren UEs darüber informiert werden, ob die Planungsinformationen auf dem PDCCH über einen vorgegebenen Teilrahmen transportiert werden.

**12.** Benutzergerät (UE) (100), umfassend:

eine Empfangskomponente (82), die so gestaltet ist, das Planungsinformationen empfangen werden, zum Planen von Gruppenbündelungskanalressourcen (GTCH-Ressourcen) zum Durchführen eines Bündelfunkdienstes mit einer Basisstation (70) auf der Grundlage eines Long-Term-Evolution-Systems (LTE-System) verwendet werden;

eine erste Beurteilungskomponente (84), die so gestaltet ist, dass beurteilt wird, ob die Planungsinformation erfolgreich empfangen werden, und/oder, ob ein durch den GTCH zugeordneter physischer gemeinsam genutzter Downlink-Kanal (PDSCH) entsprechend der Planungsinformation erfolgreich decodiert wird; und

eine zweite Übertragungskomponente (86), die so gestaltet ist, dass die UE (100) aufgrund des nicht erfolgreichen Empfangs der Planungsinformationen und/oder der gemäß den Planungsinformationen nicht erfolgreichen Decodierung des PDSCH, der durch den GTCH zugeordnet wird, negative Bestätigungsinformationen zur Basisstation (70) überträgt;

**dadurch gekennzeichnet, dass** die GTCH-Ressourcen eine von der Basisstation (70) für eine hybride automatische Wiederholungsanforderung(HARQ) zugeteilte Ressource umfassen, die für den GTCH durchgeführt wird, wobei eine Angabe zum Anzeigen, dass die HARQ durchgeführt wird, auf einem physischen Uplink-Steuerkanal (PUCCH) oder einem physischen Direktzugriffskanal (PRACH) transportiert wird.

**13.** UE (100) nach Anspruch 12, **dadurch gekennzeichnet, dass** die erste Beurteilungskomponente (84) Folgendes umfasst:

ein erstes Beurteilungselement (92), das so gestaltet ist, dass beurteilt wird, ob die Basisstation (70) die Planungsinformationen über einen physischen Downlink-Steuerkanal (PDCCH), der unter Verwendung einer zeitweiligen Gruppenfunknetzkennung (Group-RNTI) gekennzeichnet und verschlüsselt wird, zum UE (100) überträgt und ob die Basisstation (70) dem UE mitteilt, ob die Planungsinformationen des GTCH über einen vorgegebenen Teilrahmen im PDCCH vorliegen, wobei die Planungsinformationen auf dem PDCCH transportiert werden;

ein zweites Beurteilungselement (94), das so gestaltet ist, dass es auf der Grundlage eines Beurteilungsergebnisses des ersten Beurteilungselements (92), dass die Basisstation (70) die Planungsinformationen über den PDCCH, der unter Verwendung der Group-RNTI gekennzeichnet und verschlüsselt wird, zur UE (100) überträgt und die Basisstation (70) dem UE (100) mitteilt, ob die Planungsinformation des GTCH über den vorgegebenen Teilrahmen im PDCTH vorliegen, beurteilt, ob die Planungsinformationen über den PDCCH empfangen werden, der unter Verwendung der Group-RNTI gekennzeichnet und verschlüsselt wird, und/oder, ob der durch den GTCH zugeordnete PDSCH gemäß der Planungsinformation erfolgreich decodiert wird; und

ein Feststellungselement (96), das so gestaltet ist, dass auf der Grundlage des Beurteilungsergebnisses des zweiten Beurteilungselements (94), dass die Planungsfunktionen nicht über den PDCCH empfangen werden, der unter Verwendung der Group-RNTI gekennzeichnet und verschlüsselt wird und/oder der durch den GTCH zugeordnete PDSCH gemäß den Planungsinformationen nicht decodiert wird, feststellt, dass das UE (100) die Planungsinformationen nicht erfolgreich empfängt und/oder der durch den GTCH zugeordnete PDSCH gemäß den Planungsinformationen nicht erfolgreich decodiert wird.

## Revendications

**1.** Procédé de traitement d'un service à ressources partagées, consistant à :

configurer, par une station de base (70), des ressources de canal à ressources partagées de groupe, GTCH, afin de mettre en place un service à ressources partagées avec un ou plusieurs UE ;

produire (S502), par la station de base (70), des informations de planification utilisées pour planifier les ressources de GTCH sur la base d'un système à évolution à long terme, LTE ; et

transmettre (S104), par la station de base (70), les informations de planification produites au ou aux UE ;

**caractérisé en ce que** la configuration, par la station de base (70), des ressources de canal à ressources partagées de groupe, GTCH, afin de réaliser le service à ressources partagées avec le ou les UE, comprend :

l'attribution au ou aux UE, par la station de base (70), d'une ressource pour une demande de répétition automatique hybride, HARQ, réalisée pour le GTCH, dans lequel une indication, destinée à indiquer que la HARQ est réalisée, est portée sur un canal physique de commande en liaison montante, PUCCH, ou un canal physique d'accès aléatoire, PRACH.

2. Procédé selon la revendication 1, **caractérisé en ce que** la configuration, par la station de base (70), des ressources de GTCH pour réaliser le service à ressources partagées avec un ou plusieurs UE comprend en outre au moins une des actions suivantes :

   attribuer, par la station de base (70), un identifiant temporaire de réseau radio de cellule (C-RNTI) au ou aux UE ;
   attribuer, par la station de base (70), une ressource signalée périodiquement au ou aux UE;
   attribuer, par la station de base (70), une ressource de canal occupée pour maintenir une voie de synchronisation en liaison montante et/ou une synchronisation en liaison montante au ou aux UE ; et
   attribuer, par la station de base (70), un identifiant temporaire de réseau radio de groupe (Groupe-RNTI) au ou aux UE.

3. Procédé selon la revendication 1, **caractérisé en ce que**
   en se basant sur le fait que l'indication, destinée à indiquer que la HARQ est réalisée, est portée sur le PUCCH, l'attribution, par la station de base (70), de la ressource pour la HARQ réalisée sur le GTCH au ou aux UE comprend au moins une des actions suivantes : attribuer, par la station de base (70), un format de transmission d'un accusé de réception/accusé de non réception de HARQ sur le GTCH au ou aux UE ; attribuer, par la station de base (70), une valeur de décalage cyclique d'un accusé de réception/accusé de non réception de HARQ sur le GTCH au ou aux UE ;
   attribuer, par la station de base (70), une position de ressource de la HARQ sur le GTCH au sein de chaque intervalle de temps de transmission, TTI, au ou aux UE ; ou
   en se basant sur le fait que l'indication, destinée à indiquer que la HARQ est réalisée, est portée sur le PRACH, l'attribution, par la station de base (70), de la ressource pour la HARQ réalisée sur le GTCH au ou aux UE comprend au moins un des éléments suivants : un format de préambule du PRACH, une position de spectre d'un préambule du PRACH et un indice de préambule d'un préambule du PRACH.

4. Procédé selon la revendication 1, **caractérisé en ce que** la transmission, par la station de base (70), des informations de planification au ou aux UE comprend :

   le port, par la station de base (70), des informations de planification sur un canal physique de commande en liaison descendante, PDCCH ;
   l'identification et le brouillage, par la station de base (70), du PDCCH sur lequel les informations de planification sont portées en utilisant le Groupe-RNTI ; et
   la transmission, par la station de base (70), des informations de planification au ou aux UE par le biais du PDCCH identifié et brouillé.

5. Procédé selon la revendication 4, **caractérisé en ce que** la transmission, par la station de base (70), des informations de planification au ou aux UE comprend :

   la notification, par la station de base (70), au ou aux UE, du fait que les informations de planification sont portées ou pas sur le PDCCH par le biais d'une trame secondaire prédéfinie.

6. Procédé selon la revendication 1, **caractérisé en ce qu'**après la transmission, par la station de base (70), des informations de planification produites au ou aux UE, le procédé comprend en outre :

   en se basant sur le fait que des informations d'accusé de non réception provenant du ou des UE sont reçues, la station de base (70) retransmet les informations de planification du GTCH.

7. Procédé de fourniture de service à ressources partagées, consistant à :

   recevoir, par un équipement utilisateur, UE, des ressources de canal de service à ressources partagées de groupe, GTCH, pour réaliser un service à ressources partagées, en provenance d'une station de base (70) ;
   recevoir, par l'UE, des informations de planification utilisées pour planifier les ressources de GTCH pour réaliser le service à ressources partagées avec une station de base (70) sur la base d'un système à évolution à long terme, LTE (S202) ;
   évaluer, par l'UE, si les informations de planification sont bien reçues et/ou si un canal physique partagé en liaison descendante, PDSCH, mis en correspondance par le GTCH, est bien décodé conformément aux informations de planification (S204) ; et
   en se basant sur le fait que l'UE ne reçoit pas les informations de planification correctement et/ou que le PDSCH mis en correspondance par le GTCH n'est pas décodé correctement conformément aux informations de planification, transmettre, par l'UE, des informations d'accusé de non réception à la station de base (S206) ; **caractérisé en ce que** la réception des ressources de GTCH comprend :

la réception d'une ressource, attribuée par la station de base (70), pour une demande de répétition automatique hybride, HARQ, réalisée pour le GTCH, dans lequel une indication, destinée à indiquer que la HARQ est réalisée, est portée sur un canal physique de commande en liaison montante, PUCCH ou un canal physique d'accès aléatoire, PRACH.

8. Procédé selon la revendication 7, **caractérisé en ce que** l'évaluation, par l'UE, afin de savoir si les informations de planification sont correctement reçues et/ou si le PDSCH mis en correspondance par le GTCH est décodé correctement conformément aux informations de planification, comprend :

l'évaluation, par l'UE, afin de savoir si la station de base transmet les informations de planification par le biais d'un canal physique de commande en liaison descendante, PDCCH, identifié et brouillé en utilisant un identifiant temporaire de réseau radio de groupe, Groupe-RNTI, à l'UE, et si la station de base (70) notifie l'UE de la présence des informations de planification du GTCH dans le PDCCH par le biais d'une trame secondaire prédéfinie, dans lequel les informations de planification sont portées sur le PDCCH;
sur cette base, un résultat d'évaluation est que la station de base (70) transmet les informations de planification par le biais du PDCCH identifié et brouillé en utilisant le Groupe-RNTI à l'UE et que la station de base (70) notifie l'UE de la présence des informations de planification du GTCH dans le PDCCH par le biais de la trame secondaire prédéfinie, l'évaluation, par l'UE, pour savoir si les informations de planification sont reçues par le biais du PDCCH identifié et brouillé en utilisant le Groupe-RNTI et/ou si le PDSCH mis en correspondance par le GTCH est décodé correctement conformément aux informations de planification ; et
sur cette base, le résultat d'évaluation est que les informations de planification ne sont pas reçues par le biais du PDCCG identifié et brouillé en utilisant le Groupe-RNTI et/ou que le PDSCH mis en correspondance par le GTCH n'est pas décodé correctement conformément aux informations de planification, il est déterminé que l'UE ne reçoit pas les informations de planification correctement et/ou que le PDSCH mis en correspondance par le GTCH n'est pas correctement décodé conformément aux informations de planification.

9. Station de base (70), comprenant :

un composant de production (32), configuré pour produire des informations de planification utilisées pour planifier des ressources de canal à ressources partagées de groupe, GTCH, pour réaliser un service à ressources partagées avec un ou plusieurs équipements utilisateur, UE, sur la base d'un système à évolution à long terme, LTE ; et un premier composant de transmission (34), configuré pour transmettre les informations de planification produite au ou aux UE ;
un premier composant de configuration (42), configuré pour configurer les ressources de GTCH afin de réaliser le service à ressources partagées avec le ou les UE ;
**caractérisé en ce que** le composant de configuration est en outre configuré pour attribuer une ressource au ou aux UE pour une demande de répétition automatique hybride, HARQ, réalisée pour le GTCH, dans laquelle une indication, destinée à indiquer que la HARQ est réalisée, est portée sur un canal physique de commande en liaison montante, PUCCH ou un canal physique d'accès aléatoire, PRACH.

10. Station de base (70) selon la revendication 9, **caractérisée en ce que** le premier composant de transmission (34) comprend :

un élément porteur (52), configuré pour porter les informations de planification sur un canal physique de commande en liaison descendante, PDCCH ;
un élément brouilleur (54), configuré pour identifier et brouiller le PDCCH sur lequel les informations de planification sont portées, en utilisant un identifiant temporaire de réseau radio de groupe, Groupe-RNTI ; et
un élément de transmission (56), configuré pour transmettre les informations de planification au ou aux UE par le biais du PDCCH identifié et brouillé.

11. Station de base (70) selon la revendication 9, **caractérisée en ce que** le premier composant de transmission (34) comprend :

un élément de notification (62), configuré pour notifier au ou aux UE si les informations de planification sont portées sur le PDCCH par le biais d'une trame secondaire prédéfinie.

12. Équipement utilisateur (100), UE, comprenant :

un composant de réception (82), configuré pour recevoir des informations de planification utilisées pour planifier des ressources de canal à ressources partagées de groupe, GTCH, pour réaliser un service à ressources partagées avec une station de base (70) sur la base d'un système à évolution à long terme, LTE ;

un premier composant d'évaluation (84), configuré pour évaluer si les informations de planification sont bien reçues et/ou si un canal physique partagé en liaison descendante, PDSCH, mis en correspondance par le GTCH, est bien décodé conformément aux informations de planification ; et

un second composant de transmission (86) configuré, en se basant sur le fait que l'UE (100) ne reçoit pas les informations de planification correctement et/ou que le PDSCH mis en correspondance par le GTCH n'est pas décodé correctement conformément aux informations de planification, pour transmettre des informations d'accusé de non réception à la station de base (70) ;

**caractérisé en ce que** les ressources de GTCH comprennent une ressource, attribuée par la station de base (70), pour une demande de répétition automatique hybride, HARQ, réalisée pour le GTCH, dans lequel une indication, destinée à indiquer que la HARQ est réalisée, est portée sur un canal physique de commande en liaison montante, PUCCH ou un canal physique d'accès aléatoire, PRACH.

13. UE (100) selon la revendication 12, **caractérisé en ce que** le premier composant d'évaluation (84) comprend :

un premier élément d'évaluation (92), configuré pour évaluer si la station de base (70) transmet les informations de planification par le biais d'un canal physique de commande en liaison descendante, PDCCH, identifié et brouillé en utilisant un identifiant temporaire de réseau radio de groupe, Groupe-RNTI, à l'UE et si la station de base (70) notifie l'UE (100) de la présence des informations de planification du GTCH dans le PDCCH par le biais d'une trame secondaire prédéfinie, dans lequel les informations de planification sont portées sur le PDCCH ;

un second élément d'évaluation (94) configuré, en se basant sur le fait qu'un résultat d'évaluation du premier élément d'évaluation (92) est que la station de base (70) transmet les informations de planification par le biais du PDCCH identifié et brouillé en utilisant le Groupe-RNTI à l'UE (100) et que la station de base (70) notifie l'UE (100) de la présence des informations de planification du GTCH dans le PDCCH par le biais de la trame secondaire prédéfinie, pour évaluer si les informations de planification sont reçues par le biais du PDCCH identifié et brouillé en utilisant le Groupe-RNTI et/ou si le PDSCH mis en correspondance par le GTCH est décodé correctement conformément aux informations de planification ; et

un élément de détermination (96) configuré, en se basant sur le fait que le résultat d'évaluation du second élément d'évaluation (94) est que les informations de planification ne sont pas reçues par le biais du PDCCG identifié et brouillé en utilisant le Groupe-RNTI et/ou que le PDSCH mis en correspondance par le GTCH n'est pas décodé correctement conformément aux informations de planification, pour déterminer que l'UE (100) ne reçoit pas les informations de planification correctement et/ou que le PDSCH mis en correspondance par le GTCH n'est pas correctement décodé conformément aux informations de planification.

A base station generates scheduling information used for scheduling GTCH resources for performing a trunking service with one or more UEs based on a LTE system     S102

The base station transmits the generated scheduling information to the one or more UEs     S104

**Fig. 1**

A UE receives scheduling information used for scheduling GTCH resources for performing a trunking service with a base station based on a LTE system     S202

The UE judges whether the scheduling information is received successfully, and/or, whether a PDSCH mapped by the GTCH is decoded successfully according to the scheduling information     S204

In the case where the UE does not receive the scheduling information successfully, and/or the PDSCH mapped by the GTCH is not decoded successfully according to the scheduling information, the UE transmits the negative acknowledgment information to the base station     S206

**Fig. 2**

Generating component 32

First transmitting component 34

**Fig. 3**

First configurating component 42

Generating component 32

First transmitting component 34

**Fig. 4**

Generating component 32

First transmitting component 34

Bearing element 52

Scrambling element 54

Transmitting element 56

**Fig. 5**

Generating component 32

First transmitting component 34

Notifying element 62

**Fig. 6**

Base station 70

Device for performing trunking service 72

**Fig. 7**

Receiving component 82

First judging component 84

Second transmitting componen 86

**Fig. 8**

Receiving component 82

First judging component 84

First judging element 92

Second judging element 94

Determining element 96

Second transmitting component 86

**Fig. 9**

UE 100

Device for processing trunking service 102

**Fig. 10**

The map of the GTCH

**Fig. 11**

Sub-method A

**Fig. 12**

eNodeB

The list message of the HARQ
resource position of the GTCH is
transmitted periodically

Non-speaking right user

Sub-method D

# Fig. 13

eNodeB（Schedule and
retransmission）

The NACK is Feed
back by using
Format1 (format 1)
on the PUCCH

The DCI, the PDSCH assigned by
the group DCI are scheduled by the
group, and the HARQ resource of
the DTCH is assigned

Non-speaking right user

Sub-method E

# Fig. 14

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102149049 A
- CN 102638767 A